# EUROPEAN PATENT SPECIFICATION

(11) **EP 1 333 007 B1**
(45) Date of publication and mention of the grant of the patent: **01.09.2010**
(21) Application number: 03445018.9
(22) Date of filing: 31.01.2003
(51) Int. Cl.: B67D 7/32, B67D 7/84

(54) **Cable passage for fuel dispenser**
Kabeldurchführung einer Zapfsäule
Passage de câble d'une pompe à essence

(30) Priority: 01.02.2002 SE 0200320
(43) Date of publication of application: 06.08.2003
(73) Proprietor: DRESSER WAYNE AB, 200 61 Malmö (SE)
(72) Inventor: Larsson, Bengt I., 274 53 Skivarp (SE); Wemmert, Marlene, 214 43 Malmö (SE)
(74) Representative: Milanov, Nina Vendela Maria

(56) References cited:
- EP-A- 0 431 873
- EP-A- 0 618 656
- DE-A- 3 624 407
- DE-A- 4 434 202
- GB-A- 2 260 452
- US-A- 5 911 248

## Description

### Field of the Invention

The invention relates to a fuel metering pump or fuel dispenser and particularly to a device for partitioning a space in a fuel pump or dispenser into a first and second subspace, for the purpose of preventing fuel vapours from spreading between the subspaces. The invention further relates to a column extension of a fuel pump or dispenser and to a method for partitioning a space of the above-mentioned type.

### Technical Background

A fuel filling installation for filling the tank of a motor vehicle with liquid fuel typically comprises a fuel metering pump or a fuel dispenser, which by means of conduits is connected to one or more fuel containers in which the fuel is stored. A fuel pump or dispenser comprises a pumping unit or a hydraulic module/unit contained in a hydraulic housing or cabinet, which usually is arranged on a base socket on the ground. Arranged beside and in connection with the hydraulic housing is a column extension. The fuel pump or dispenser further comprises an electronics head or display unit showing, for example, the choice of fuel type, the amount of fuel supplied to the tank of a car and the price. Typically, the electronics head is supported by the column extension and is arranged above the hydraulic housing. Cables are pulled through the column between the hydraulic housing and the electronics head.

In order to minimise the risk of explosion at fuel filling installations, there are certain requirements of the authorities for such installations. The various spaces within a fuel pump or dispenser are classified depending on the presence of fuel vapours. The hydraulic module is classified as a hazardous area or zone 1, i.e. an area in which explosive gas atmosphere is present or may be expected to be present in quantities such as to require special precautions for the construction, installation and use. The column extension is a zone 1, which means that fuel vapours may be present. The electronics head or display unit should constitute a non-hazardous area (un-classified zone). It is therefore important that sufficient ventilation be achieved and that fuel vapours be prevented from spreading from the hydraulic unit into the electronics head.

A known way of preventing fuel vapours from spreading between the hydraulic unit and the column is to arrange a vapour barrier in the form of one or two plates in the opening between the two spaces (see for example CEN TC 221, prEN 13 617-1). The electronics head is in turn separated from the column by a similar arrangement. Each plate is provided with cable entry holes, through which the cables running between the hydraulic unit and the electronics head are pulled. Each cable is pulled through a respective hole in each plate and is at each wall entrance provided with a grommet or cable bushing. In the use of double plates in a vapour barrier, air gaps between the plates should be formed so as to avoid vapour traps.

During installation of a fuel pump or fuel dispenser, each cable is pulled through a hole in each plate and an associated grommet is secured on the cable at each wall entrance. This way of procedure is rather time-consuming. A further disadvantage of the otherwise well-functioning above-mentioned vapour barrier is that there is a risk of scraping or tearing the cable against the edges of the cable entry holes during installation, causing damage to the isolation or covering of the cable.

Another disadvantage of the above-mentioned plates with cable entry holes is that each time, during installation, a cable is to be pulled through the plate, a connector, plug, cable lug or socket etc, if any, has to be withdrawn and reattached.

The same problems arise during maintenance of the fuel pump or dispenser.

Furthermore, a vapour barrier including a grommet for each cable makes the solution according to the above technique rather costly.

Further background art is also reflected by US-5,911,248.

### Summary of the Invention

It is therefore an object of the present invention to provide, with respect to prior-art technique, an improved device for partitioning a space in a fuel metering pump or fuel dispenser, through which space cables are adapted to be pulled or drawn, and to provide a column extension of a fuel metering pump or dispenser and a fuel metering pump or dispenser comprising at least one such device. It is also an object to provide a method for partitioning a space of the above-mentioned type.

This and other objects are achieved wholly or partially by a device or method comprising the features of any one of the independent claims. Preferred embodiments are set forth in the dependent claims and in the following description.

By providing the inventive device with a first and second sealing member to be arranged at opposite sides of one or more cables, the step of pulling each cable at a time during installation is avoided. One or both of the sealing members may be mounted after all cables have been pulled and connected. This means that the risk of scraping the cables is minimised and the time needed for installation and maintenance may be reduced. The close abutment of the sealing members against said cables alleviates the need for mounting a separate seal, such as a grommet, at each cable, resulting in shorter time needed for installation and lower costs.

Furthermore, the inventive device allows a cable to be provided with, for example, a "bulky" connector, plug, cable socket or lug while being pulled between two areas of the fuel pump or dispenser. This facilitates the work of installation and maintenance and thus reduces both installation and maintenance costs.

With the device according to the invention, the number of cables that can be pulled through the space is not critical, whereby mainly one design of the device can be used irrespectively of the number of cables to be pulled. It is furthermore simple to add or remove one or more cables without needing any extra equipment such as additional grommets or blind plugs.

One embodiment of the inventive device is characterized in that at least one of the sealing members comprises a resilient part for abutment against the cables. This embodiment has the advantage that the resilient part spares the cables and that it is possible to slightly adjust the cables, in comparison with the prior art technique in which each cable is fixed by an associated cable bushing.

A still further embodiment of the invention is characterised in that each sealing member may be provided with a holding means. This makes it possible to obtain a more stable arrangement of the device for partitioning and especially the holding means may be enlarged, for example, for the purpose of partitioning a space which has a large cross-sectional area.

By adding a third sealing member, a device allowing more cables to be pulled through the device is provided.

A column extension comprising at least one device for partitioning of a space as stated above, results in a column extension through which cables may be pulled from the hydraulic housing to the electronics head and in which the fuel vapours are prevented from spreading along the cables.

According to a second aspect of the invention, a column extension which comprises an elongated portion which is U-shaped in cross-section is provided. By means of the U-shaped portion, a channel in which the cables may be pulled is formed, whereby the need for pulling the cables through the interior of the column extension (zone 1) is eliminated.

The inventive fuel metering pump or fuel dispenser presents advantages corresponding to the ones described above.

The inventive method for partitioning a space in a fuel metering pump or fuel dispenser into a first and second subspace results in a convenient and inexpensive method for installing and maintaining a device for preventing fuel vapours from spreading.

### Brief Description of the Drawings

The invention will now be described in more detail with reference to the accompanying schematic drawings, which show examples of presently preferred embodiments of the invention.
Fig. 1 is a schematic side view of a prior-art fuel metering pump or fuel dispenser.
Fig. 2 shows schematically the pump or dispenser of Fig. 1 in section.
Fig. 3 shows schematically a vapour barrier according to prior art.
Figs 4 and 5 show a device for partitioning a space according to a first embodiment of the invention.
Figs 6 and 7 show a device according to a second embodiment of the invention.
Figs 8 and 9 each show part of the device according to still another embodiment of the invention.
Fig. 10 shows schematically an assembled device for partitioning according to the embodiment in Fig. 8.
Fig. 11 shows schematically and in section a fuel metering pump or dispenser with a column extension according to one embodiment of the inventive column extension.
Fig. 12 is a perspective view of a portion of a column extension according to the second aspect of the invention.
Fig. 13 is a cross-sectional view (XIII-XIII) of the portion in Fig. 12.

### Description of Preferred Embodiments

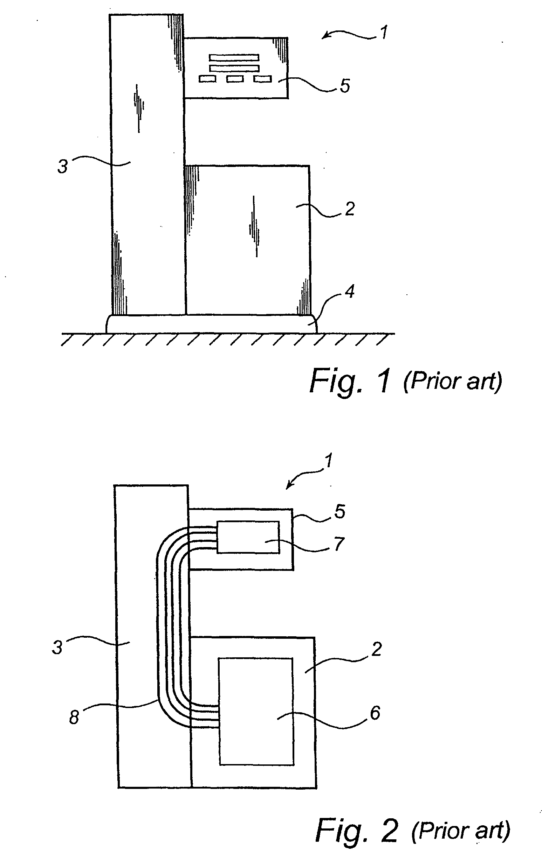

Figs 1-3 relate to prior art. In Fig. 1, a fuel metering pump or dispenser 1 is shown. The fuel pump or dispenser 1 has a hydraulic casing or cabinet 2 and a column extension 3. The casing 2 and the column 3 are arranged on a base socket 4 on the ground. The fuel pump/dispenser 1 further comprises an electronics head or display unit 5 supported by the column extension 3. Fig. 2 shows the fuel pump/dispenser 1 according to Fig. 1 in section. Between a hydraulic module or pumping unit 6 and an electronic module 7, cables 8 are pulled through the column extension 3.

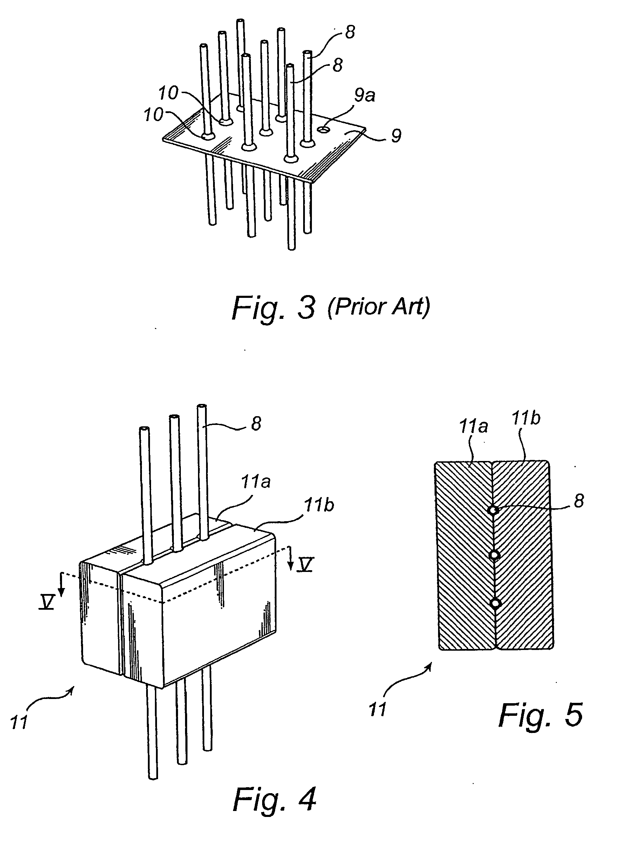

In Fig. 3 there is shown a plate 9 to be used as a vapour barrier by partitioning, for example, the column 3 into subspaces. A plate 9 can also be arranged in the interface between the hydraulic housing 2 and the column 3 and between the column 3 and the electronics head 5. The plate 9 is provided with several holes 9a through each of which a cable 8 is pulled. At the cable entry hole 9a, the cable 8 is provided with a grommet or cable bushing 10.

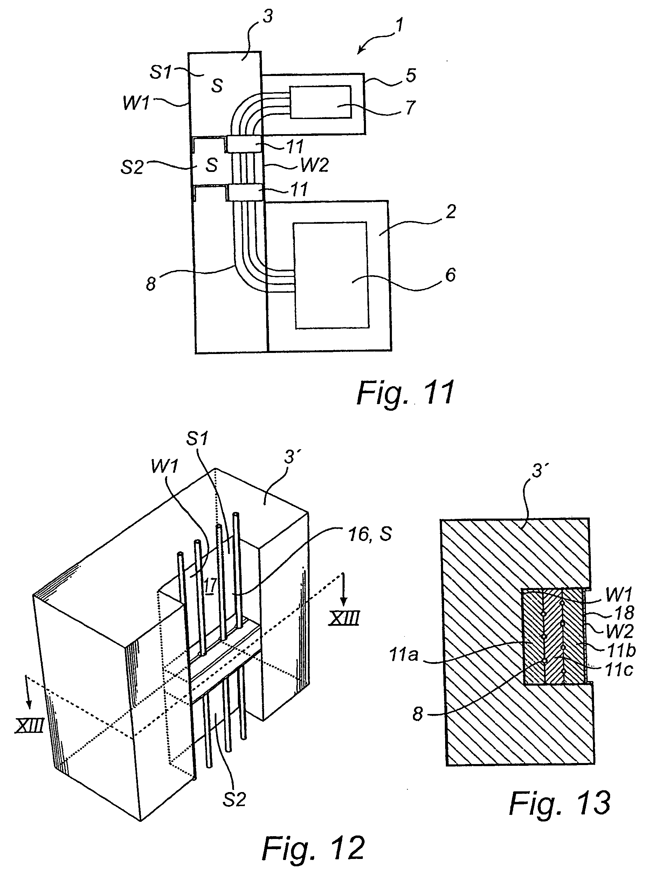

Fig. 4 is a perspective side view of a first embodiment of the inventive device 11 for partitioning a space of a fuel pump or dispenser 1 (see Fig. 11). The device 11 comprises a first 11a and a second 11b sealing member made of a material which is adapted for close abutment against the cables 8, which are pulled through the device 11, and which prevents fuel vapours from spreading from one side of the device 11 to the opposite side in the longitudinal direction of the cables 8. Fig. 5 shows a cross-section of the device 11 taken in a plane (V-V) transversely to the main direction of the cables 8.

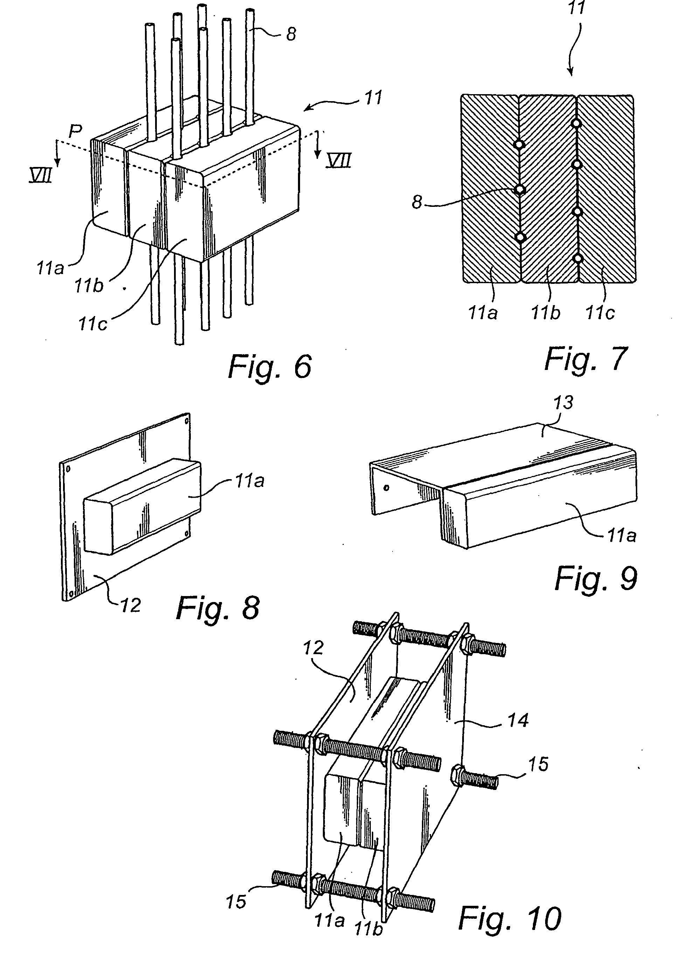

In Figs 6 and 7, a second embodiment of the device for partitioning according to the invention is shown.
This embodiment comprises a third sealing member 11c, which is arranged in a plane P common with and between the first and second sealing members 11a, 11b. This embodiment is suitable if the number of cables is large since the cables 8 can be distributed between the first and third sealing members 11a, 11c and between the second and third sealing members 11b, 11c. This embodiment is also suitable when the cables 8 are of a large dimension since the distance between two adjacent cables then has to be larger to establish a satisfying seal between the cables.

The choice of material for the sealing members 11a-c is not critical as long as the material meets the requirements set, i.e. to provide close abutment against the cables and to prevent fuel vapours from spreading through them. As a non-limiting example of material of the sealing member, mention can be made of a resilient material of the type expanded rubber, such as foam rubber of various kinds. Cotton-waste may be mentioned as a non-limiting example of a non-resilient material that can be used. The choice of material might be affected by other factors such as prices and availability. Furthermore, two adjacent sealing members may be of different materials. For example, it would be possible to have one sealing member formed by a metal plate and one member formed by a resilient material, such as foam rubber.

Fig. 8 shows part of an embodiment of the invention, wherein the sealing member 11a is attached to a holding or mounting means 12. The holding means 12 allows releasable mounting of the sealing member 11a on a wall of the space to be partitioned. Fig. 9 shows an alternative holding means 13. The latter holding means 13 is suited for partitioning spaces with large cross-sectional areas. The holding means may be formed of, for example, a metal plate. Fig. 10 shows a device 11 comprising two holding means 12, 14 which can be pressed together with the aid of tightening means 15 such as screws. At least one of the shown holding means 12, 14 may have another design, e.g. the design of the holding means 13 shown in Fig. 9. In a device with three sealing members 11a-c, the middle member may consist of a holder of the type 13 in Fig. 9, on both sides of which a resilient member is mounted for abutment or bearing against the cables 8. By this arrangement cables may be arranged in two groups separated from each other by using a broad holding means 13 in the middle.

The fuel metering pump or dispenser 1 in Fig. 11 is provided with two inventive sealing devices 11. The uppermost sealing device 11 partitions a space S into two subspaces S1, S2. The cables 8 are pulled from the hydraulic module 6 to the electronic module 7 through the devices 11. The number of devices 11 and the places for their arrangement can be chosen depending on the configuration of the pump/dispenser. The members 11a, 11b or holding means 12, 13, 14 of the device 11 are attached to opposite walls W1, W2 of the space S.

In Fig. 12 is shown a portion 3' of the column extension 3 according to the second aspect of the invention. The elongated portion 3' has a U-shaped transversal cross-section. By means of this design the portion 3' encloses a channel 16 in which the cables 8 are pulled through one or more sealing devices 11 accommodated in the channel 16. The device 11 shown in Fig. 12 partitions the space S into two subspaces S1, S2. A cross-sectional view of the portion 3' in Fig. 12 taken along the plane XIII-XIII is shown in Fig. 13. The device 11 in Fig. 13 comprises three resilient sealing members 11a-c which are pressed together by a U-shaped cover 18 which is mounted on the column extension 3 to seal the channel 16.

When mounting the inventive device for partitioning a space S, a first sealing member 11a is attached to a first wall W1 (see Fig. 13) of the space S. The member 11a may be attached to the wall W1 by means of, for example, glue of any type. Thereafter one or more cables 8 are arranged so that they are distributed along the member 11a and each abut against the same. A second sealing member 11b is attached by means of glue to the first sealing member 11a or is just hand-held against the cables 8. If the cross-sectional area of the space S to be partitioned is small, the second member 11b might have to be squeezed into the remaining gap between the cables 8 and a second wall W2 opposite to the first wall W1. In many cases, it is possible to mount the second wall W2 after the device 11 has been mounted. In the case of devices 11 with three or more sealing members 11a-c, the procedure of arranging the cables 8 and attaching the second sealing member is repeated a corresponding number of times.

For devices comprising holding means 12; 13, 14, the the sealing members 11a-c are arranged to abut or bear against the cables 8 by mounting the holders 12; 13, 14 on the walls W1, W2.

The sealing members 11a-c could be provided with a self-adhesive film or layer for quick and easy mounting.

It will be appreciated that by a space to be partitioned is meant either a space with only one compartment, such as a column extension, or a space consisting of two communicating compartments, such as a column extension and an electronics head of the fuel metering pump or dispenser.

A person skilled in the art appreciates that there are many possibilities of varying the described embodiments within the scope of the claims.

For example, it would be possible to use - instead of two or more sealing members - one foldable member, so that each folded layer of the member is arranged between two rows of cables. It would also be possible to use a ring-shaped member which is configured to encompass each row of cables. Furthermore, it would be possible to use a flexible bag containing a fluid as sealing member.

## Claims

1. A fuel metering pump or fuel dispenser comprising a fuel vapour sealing device (11) for partitioning a space (S) in the fuel metering pump or fuel dispenser (1) into a first and second subspace (S1, S2) for the purpose of preventing fuel vapours from spreading between the subspaces (S1, S2), through which fuel vapour sealing device (11) one or more cables (8) extending in the space (S) are pulled,
**characterised by** a first and a second sealing member (11a, 11b) between which said one or more cables (8) are pulled, said sealing members (11a, 11b) being arranged opposite each other on either side of said one or more cables (8) for close abutment against said one or more cables (8).

2. A fuel metering pump or fuel dispenser according to claim 1, wherein at least one of the fuel vapour sealing members comprises a resilient part (11a, 11b) adapted to abut against said one or more cables.

3. A fuel metering pump or fuel dispenser according to claim 2, wherein at least one of the fuel vapour sealing members further comprises a holding means (12; 13) which is configured to support the resilient part (11a; 11b) of the fuel vapour sealing member.

4. A fuel metering pump or fuel dispenser according to any one of the preceding claims, further comprising a third fuel vapour sealing member (11c) configured to be arranged in a plane (P) common with and between the first and second fuel vapour sealing members (11a, 11b).

5. A fuel metering pump or fuel dispenser according to any one of claims 1-4, further comprising a column extension (3) for supporting an electronics unit (5) of a fuel metering pump or fuel dispenser (1),
**characterised in that** the column extension (3) comprises the fuel vapour sealing device (11).

6. A fuel metering pump or fuel dispenser according to claim 5, wherein the column extension (3) further comprises an elongated portion (3') having a U-shaped transversal cross-section, by means of which the portion (3') encloses a channel (16) configured to accommodate one or more cables (8) and said at least one fuel vapour sealing device (11) for partitioning the channel (16), and a cover (18) to be mounted so as to seal a longitudinal opening (17) of the channel (16).

7. A method for partitioning a space (S) in a fuel metering pump or fuel dispenser (1) into a first and second subspace (S1, S2) for the purpose of preventing fuel vapours from spreading between the two subspaces (S1, S2), in which space (S) one or more cables (8) are extended,
**characterised by** the steps of:
mounting a first fuel vapour sealing member (11a) on a first wall (W1) of the space (S);
arranging said one or more cables (8) transversely to the first fuel vapour sealing member (11a) for close abutment against the same; and
mounting a second fuel vapour sealing member (11b) between said one or more cables (8) and a second wall (W2) opposite the first wall (W1) for close abutment against said one or more cables (8).

8. A method according to claim 7, wherein the step of mounting a first fuel vapour sealing member (11a) on a first wall (W1) of the space (S) further comprises the initial step of mounting said first fuel vapour sealing member (11a) on a first holding means (12; 13) which is subsequently mounted on said first wall (W1).

9. A method according to claim 7 or 8, wherein the step of mounting a second fuel vapour sealing member (11b) between said one or more cables (8) and the second wall (W2) further comprises the step of mounting said second fuel vapour sealing member (11b) on a second holding means (12; 13).

## Patentansprüche

1. Kraftstoffdosierpumpe oder Zapfsäule, umfassend eine Kraftstoffdampf-Abdichtungsvorrichtung (11) zum Aufteilen eines Raums (S) in der Kraftstoffdosierpumpe oder Zapfsäule (1) in einen ersten und einen zweiten Teilraum (S1, S2) zum Zwecke des Verhinderns der Ausbreitung von Kraftstoffdämpfen zwischen den Teilräumen (S1, S2), wobei durch diese Kraftstoffdampf-Abdichtungsvorrichtung (11) hindurch ein oder mehrere sich in dem Raum (S) erstreckende Kabel (8) gezogen sind,
**gekennzeichnet durch** ein erstes und ein zweites Abdichtungselement (11a, 11b), zwischen denen das eine oder die mehreren Kabel (8) gezogen sind, wobei die Abdichtungselemente (11a, 11b) einander gegenüberliegend beiderseits des einen oder der mehreren Kabel (8) angeordnet sind, so dass sie dicht an dem einen oder den mehreren Kabeln (8) anliegen.

2. Kraftstoffdosierpumpe oder Zapfsäule nach Anspruch 1, wobei mindestens eines der Kraftstoffdampf-Abdichtungselemente einen elastischen Teil (11a, 11 b) umfasst, der dazu eingerichtet, an dem einen oder den mehreren Kabeln anzuliegen.

3. Kraftstoffdosierpumpe oder Zapfsäule nach Anspruch 2, wobei mindestens eines der Kraftstoffdampf-Abdichtungselemente ferner ein Haltemittel (12; 13) umfasst, welches dafür ausgebildet ist, den elastischen Teil (11a, 11 b) des Kraftstoffdampf-Abdichtungselements abzustützen.

4. Kraftstoffdosierpumpe oder Zapfsäule nach einem der vorhergehenden Ansprüche, ferner ein drittes Kraftstoffdampf-Abdichtungselement (11c) umfassend, das dafür ausgebildet ist, in einer gemeinsamen Ebene (P) mit dem ersten und dem zweiten Kraftstoffdampf-Abdichtungselement (11a, 11 b) und zwischen ihnen angeordnet zu werden.

5. Kraftstoffdosierpumpe oder Zapfsäule nach einem der Ansprüche 1-4, ferner eine Säulenverlängerung (3) zum Abstützen einer Elektronikeinheit (5) einer Kraftstoffdosierpumpe oder Zapfsäule (1) umfassend,
**dadurch gekennzeichnet, dass** die Säulenverlängerung (3) die Kraftstoffdampf-Abdichtungsvorrichtung (11) umfasst.

6. Kraftstoffdosierpumpe oder Zapfsäule nach Anspruch 5, wobei die Säulenverlängerung (3) ferner umfasst: einen langgestreckten Abschnitt (3'), der einen U-förmigen Querschnitt aufweist, mittels dessen der Abschnitt (3') einen Kanal (16) umschließt, der dafür ausgebildet ist, ein oder mehrere Kabel (8) und die mindestens eine Kraftstoffdampf-Abdichtungsvorrichtung (11) zum Aufteilen des Kanals (16) aufzunehmen, und eine Abdeckung (18), die so anzubringen ist, dass sie eine Längsöffnung (17) des Kanals (16) abdichtet.

7. Verfahren zum Aufteilen eines Raums (S) in einer Kraftstoffdosierpumpe oder Zapfsäule (1) in einen ersten und einen zweiten Teilraum (S1, S2) zum Zwecke des Verhinderns der Ausbreitung von Kraftstoffdämpfen zwischen den Teilräumen (S1, S2), wobei sich in diesem Raum (S) ein oder mehrere Kabel (8) erstrecken, **gekennzeichnet durch** die folgenden Schritte:
Anbringen eines ersten Kraftstoffdampf-Abdichtungselements (11a) an einer ersten Wand (W1) des Raums (S);
Anordnen des einen oder der mehreren Kabel (8) quer zu dem ersten Kraftstoffdampf-Abdichtungselement (11a), so dass sie dicht an demselben anliegen; und
Anbringen eines zweiten Kraftstoffdampf-Abdichtungselements (11b) zwischen dem einen oder den mehreren Kabeln (8) und einer zweiten Wand (W2), die der ersten Wand (W1) gegenüberliegt, so dass es dicht an dem einen oder den mehreren Kabeln (8) anliegt.

8. Verfahren nach Anspruch 7, wobei der Schritt des Anbringens eines ersten Kraftstoffdampf-Abdichtungselements (11a) an einer ersten Wand (W1) des Raums (S) ferner den Anfangsschritt des Anbringens des ersten Kraftstoffdampf-Abdichtungselements (11a) an einem ersten Haltemittel (12; 13) umfasst, welches anschließend an der ersten Wand (W1) angebracht wird.

9. Verfahren nach Anspruch 7 oder 8, wobei der Schritt des Anbringens eines zweiten Kraftstoffdampf-Abdichtungselements (11 b) zwischen dem einen oder den mehreren Kabeln (8) und der zweiten Wand (W2) ferner den Schritt des Anbringens des zweiten Kraftstoffdampf-Abdichtungselements (11 b) an einem zweiten Haltemittel (12; 13) umfasst.

## Revendications

1. Pompe de dosage d'essence ou pompe à essence comprenant un dispositif d'étanchéité à la vapeur de carburant (11) pour diviser un espace (S) dans la pompe de dosage d'essence ou la pompe à essence (1) en un premier et un second sous-espace (S1, S2) dans le but d'empêcher les vapeurs d'essence de se diffuser entre les sous-espaces (S1, S2), à travers lequel dispositif d'étanchéité à la vapeur d'essence (11) un ou plusieurs câbles (8) s'étendant dans l'espace (S) sont tirés,
**caractérisée par** un premier et un second élément d'étanchéité (11 a, 11 b) entre lesquels lesdits un ou plusieurs câbles (8) sont tirés, lesdits éléments d'étanchéité (11a, 11b) étant disposés à l'opposé l'un de l'autre sur l'un et l'autre côtés desdits un ou plusieurs câbles (8) afin de venir buter étroitement contre lesdits un ou plusieurs câbles (8).

2. Pompe de dosage d'essence ou pompe à essence selon la revendication 1, dans laquelle au moins un des éléments d'étanchéité à la vapeur d'essence comprend une partie résiliente (11a, 11b) adaptée afin de buter contre lesdits un ou plusieurs câbles.

3. Pompe de dosage d'essence ou pompe à essence selon la revendication 2, dans laquelle au moins un des éléments d'étanchéité à la vapeur d'essence comprend en outre un moyen de retenue (12; 13) qui est configuré afin de supporter la partie résiliente (11a; 11b) de l'élément d'étanchéité à la vapeur d'essence.

4. Pompe de dosage d'essence ou pompe à essence selon une quelconque des revendications précédentes, comprenant en outre un troisième élément d'étanchéité à la vapeur d'essence (11 c) configuré afin d'être disposé dans un plan (P) commun à et interposé entre le premier et le second éléments d'étanchéité à la vapeur d'essence (11a, 11b).

5. Pompe de dosage d'essence ou pompe à essence selon une quelconque des revendications 1 à 4, comprenant en outre une extension de colonne (3) pour supporter une unité électronique (5) d'une pompe de dosage de carburant ou d'une pompe à essence (1), **caractérisée en ce que** l'extension de colonne (3) comprend le dispositif d'étanchéité à la vapeur d'essence (11).

6. Pompe de dosage d'essence ou pompe à essence selon la revendication 5, dans laquelle l'extension de colonne (3) comprend en outre une portion allongée (3') ayant une section transversale en forme de U, au moyen de laquelle la portion (3') enclot un canal (16) configuré afin de renfermer un ou plusieurs câbles (8) et ledit au moins un dispositif d'étanchéité à la vapeur d'essence (11) pour diviser le canal (16), et un couvercle (18) à monter afin de sceller de manière étanche une ouverture longitudinale (17) du canal (16).

7. Procédé de division d'un espace (S) dans une pompe de dosage d'essence ou une pompe à essence (1) en un premier et un second sous-espaces (S1, S2) dans le but d'empêcher les vapeurs d'essence de se diffuser entre les deux sous-espaces (S1, S2), dans lequel espace (S2) un ou plusieurs câbles (8) sont étendus,
**caractérisés par** les étapes consistant à:
monter un premier élément d'étanchéité à la valeur d'essence (11a) sur une première paroi (W1) de l'espace (S);
disposer lesdits un ou plusieurs câbles (8) transversalement au premier élément d'étanchéité à la vapeur d'essence (11a) afin de venir buter étroitement contre ce dernier; et
monter un second élément d'étanchéité à la vapeur d'essence (11 b) entre lesdits un ou plusieurs câbles (8) et une seconde paroi (W2) opposée à la première paroi (W1) afin de venir buter étroitement contre lesdits un ou plusieurs câbles (8).

8. Procédé selon la revendication 7, dans lequel l'étape de montage d'un premier élément d'étanchéité à la vapeur d'essence (11a) sur une première paroi (W1) de l'espace (S) comprend en outre l'étape initiale de montage dudit premier élément d'étanchéité à la vapeur d'essence (11 a) sur un premier moyen de retenue (12;13) qui est ensuite monté sur ladite première paroi (W1).

9. Procédé selon la revendication 7 ou 8, dans lequel l'étape de montage d'un second élément d'étanchéité à la vapeur d'essence (11b) entre lesdits un ou plusieurs câbles (8) et la seconde paroi (W2) comprend en outre l'étape de montage dudit second élément d'étanchéité à la vapeur d'essence (11b) sur un second moyen de retenue (12; 13).
